# EUROPEAN PATENT APPLICATION

(11) **EP 3 147 030 A1**
(43) Date of publication of application: **29.03.2017**
(21) Application number: 16190780.3
(22) Date of filing: 27.09.2016
(51) Int. Cl.: B05B 1/16

(54) **DIVERTER WITH VERTICAL AND HORIZONTAL VALVE STRUCTURE**

(30) Priority: 28.09.2015 CN 201520755633 U
(71) Applicant: Xiamen Runner Industrial Corporation, Xiamen 361021 (CN)
(72) Inventor: CHEN, CAN-XIANG, Xiamen, Fujian 361021 (CN); CHEN, XI-MIN, Xiamen, Fujian 361021 (CN); ZHANG, RONG-GUI, Xiamen, Fujian 361021 (CN); ZHENG, SHI-MING, Xiamen, Fujian 361021 (CN)
(74) Representative: Cabinet Chaillot

(57) **Abstract**

A mini vertical-and-horizontal valve structure, comprising: a rear water channel 600, connected to an outside pipeline; a first valve 400, disposed vertically in the rear water channel to switch between water routes; a second valve 700, disposed horizontally in the rear water channel; a front water channel 100, connected fixedly to one end of the rear water channel; a push button 200, disposed on the front water channel, to control the first valve and the second valve; and a connection rod 300, with its one end connected fixedly to the push button, and with its other end connected fixedly to the first valve and the second valve. The valve structure is novel in design, compact in structure, a plurality of valves are arranged to dispose vertically or horizontally to reduce space it occupies. A push button is used to control the valves to switch between a plurality of water channels.

## Description

### BACKGROUND OF THE INVENTION

### Field of the Invention

The present invention relates to bathing and sanitary device, and in particular to a mini vertical and horizontal engine structure.

### The Prior Arts

Presently on the market, it is very common to put a plurality of control valves used for switching water routes in a same device. In which, the control valves are placed to orient toward the same direction. This type of structure tends to make the device overly long in length, and not aesthetically pleasing. Besides, it occupies a large space, thus it is not convenient for the user to use.

Therefore, presently, the design and performance of the water route switching device is not quite satisfactory, and it leaves much room for improvement.

### SUMMARY OF THE INVENTION

In view of the problems and drawbacks of the prior art, the present invention provides a mini vertical-and-horizontal engine structure, that is novel in design, compact in structure, and small in volume, to overcome the shortcomings of the Prior Art.

The present invention provides a mini vertical-and-horizontal engine structure, comprising: a rear water channel, a first engine, a second engine, a front water channel, a push button, and a connection rod. The rear water channel is connected to an outside pipeline. The first engine is disposed vertically in the rear water channel to switch between water routes. The second engine is disposed horizontally in the rear water channel to switch between water routes. The front water channel is connected fixedly to one end of the rear water channel. The push button is disposed on the front water channel, to control the first engine and the second engine. And, the connection rod having its one end connected fixedly to the push button, while its other end is connected fixedly to the first engine and the second engine.

In an aspect of the present invention, one end of the rear water channel is provided with a water input port, while one other end of the rear water channel is provided with three water output holes.

In another aspect of the present invention, one end of the front water channel is provided with three water input holes, the respective water input holes are connected and fixed to the respective water output holes of the rear water channel; one other end of the front water channel is provided with three water output ports; and in the front water channel is provided with a first water route, a second water route, and a third water route, each connected to the water input hole and the water output port.

In yet another aspect of the present invention, the first engine is disposed in the rear water channel and is movable up and down; while the second engine is disposed in the rear water channel, and is movable to the right and to the left.

In a further aspect of the present invention, the mini vertical-and-horizontal engine structure further includes: a card, through which the first engine is connected and fixed to the rear water channel; a card slot, disposed on the first engine, and is used to fit the card; and a card hole, disposed on an upper end of the rear water channel, and is used to receive and fit the card, wherein, the length of the card slot is greater than the height of the card.

In another aspect of the present invention, the mini vertical-and-horizontal engine structure further includes: a spring, with its one end disposed at a bottom of the first engine, and with its other end connected and fixed in the rear water channel.

In yet another aspect of the present invention, the mini vertical-and-horizontal engine structure further includes: a card axis, disposed on the front water channel, and is used to connect and fix the push button; and a hole slot, disposed on the push button, and is fastened to the card axis of the front water channel.

Compared with the Prior Art, the present invention has the advantages that, it is novel in design, compact in structure, in which a plurality of engines are arranged to dispose vertically or horizontally to reduce the volume of the mini vertical-and-horizontal engine structure, and the space it occupies. As such, a push button is used to control the engines to switch between a plurality of water routes.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the spirit and scope of the present invention will become apparent to those skilled in the art from the detail descriptions.

### BRIEF DESCRIPTION OF THE DRAWINGS

The related drawings in connection with the detailed descriptions of the present invention to be made later are described briefly as follows, in which:
Fig. 1 is a schematic diagram of a mini vertical-and-horizontal engine structure according to an embodiment of the present invention; and
Fig. 2 is an exploded view of a mini vertical-and-horizontal engine structure according to an embodiment of the present invention.

### DETAILED DESCRIPTION OF THE PREFERRED EMBODIMENT

The purpose, construction, features, functions and advantages of the present invention can be appreciated and understood more thoroughly through the following detailed descriptions with reference to the attached drawings.

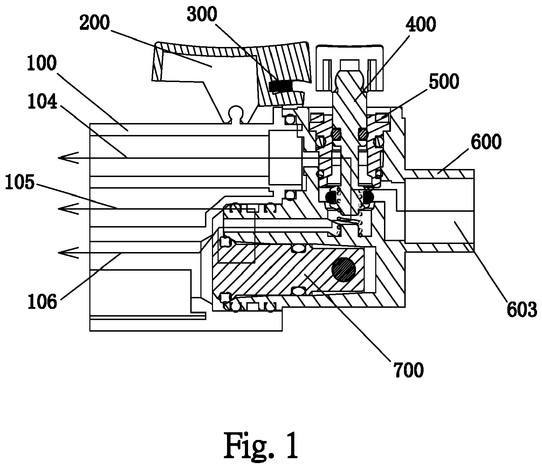

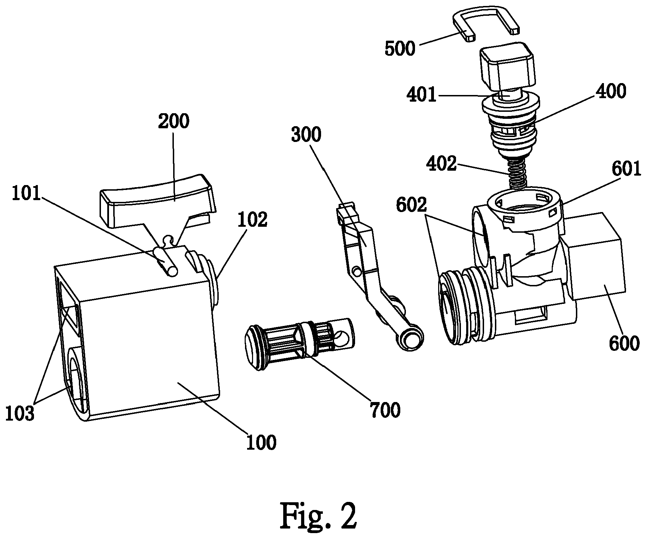

Refer to Figs. 1 and 2 respectively for a schematic diagram of a mini vertical-and-horizontal engine structure according to an embodiment of the present invention; and an exploded view of a mini vertical-and-horizontal engine structure according to an embodiment of the present invention.

As shown in Figs. 1 and 2, the mini vertical and horizontal engine structure includes: a rear water channel 600, a first engine 400, a second engine 700, a front water channel 100, a push button 200, and a connection rod 300. The rear water channel 600 is connected to an outside pipeline. The first engine 400 is disposed vertically in the rear water channel 600 to switch between water routes; while the second engine 700 is disposed horizontally in the rear water channel 600 to switch between water routes. The front water channel 100 is connected fixedly to one end of the rear water channel 600. The push button 200 is disposed on the front water channel 100, to control the first engine 400 and the second engine 700. And, the connection rod having its one end connected fixedly to the push button 200, while its other end is connected fixedly to the first engine 400 and the second engine 700.

In an embodiment of the present invention, one end of the rear water channel 600 is provided with a water input port 603, while one other end of the rear water channel 600 is provided with three water output holes 602.

In an embodiment of the present invention, one end of the front water channel 100 is provided with three water input holes 102, the respective water input holes 102 are connected and fixed to the respective water output holes 602 of the rear water channel 600; one other end of the front water channel 100 is provided with three water output ports 103; and in the front water channel 100 is provided with a first water route A104, a second water route B105, and a third water route C106, each connected to the water input hole 102 and the water output port 103.

In an embodiment of the present invention, the first engine 400 is disposed in the rear water channel 600 and is movable up and down; while the second engine 700 is disposed in the rear water channel 600, and is movable to the right and to the left.

In an embodiment of the present invention, the mini vertical-and-horizontal engine structure further includes: a card 500, through which the first engine 400 is connected and fixed to the rear water channel 600; a card slot 401, disposed on the first engine 400, and is used to fit the card 500; and a card hole 601, disposed on an upper end of the rear water channel 600, and is used to receive and fit the card 500. Wherein, the length of the card slot 401 is greater than the height of the card.

In an embodiment of the present invention, the mini vertical-and-horizontal engine structure further includes: a spring 402, with its one end disposed at a bottom of the first engine 400, and with its other end connected and fixed in the rear water channel 600.

In an embodiment of the present invention, the mini vertical-and-horizontal engine structure further includes: a card axis 101, disposed on the front water channel 100, and is used to connect and fix the push button 200; and a hole slot, disposed on the push button 200, and is fastened to the card axis 100 of the front water channel 100.

In an embodiment of the present invention, the first engine 400 is disposed vertically, while the second engine 700 is disposed horizontally, thus reducing length of the engine structure, and the space it occupies. In this way, more engines can be added to achieve the switching functions required. In addition, three water routes are added to provide switching between water routes of different functions.

The applications of the present invention are described as follows: In operation, water flows in the rear water channel 600 through the water input port 603. When the rear end of the push button 200 is pressed, the first engine 400 is made to form tight seal contact with the rear water channel 600, thus blocking water flow to the second water route B105 and the third water route C106, while water is allowed only to flow to the first water route A104. When the front end of the push button 200 is pressed, the first engine 400 moves upward under action of the spring 402, and the second engine700 is brought to move to the left by the connection rod 300 connected fixedly to the push button 200, to form tight seal contact with the front water channel 100. As such, the third water route C106 is blocked, and water is allowed to flow to the second water route B105. In normal condition, when the push button 200 is level, the second water route B105 is open, water flows out from the water output port 103 through the second water route B105.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A mini vertical-and-horizontal engine structure, comprising:
a rear water channel, connected to an outside pipeline;
a first engine, disposed vertically in the rear water channel to switch between water routes;
a second engine, disposed horizontally in the rear water channel to switch between water routes;
a front water channel, connected fixedly to one end of the rear water channel;
a push button, disposed on the front water channel, to control the first engine and the second engine; and
a connection rod, with its one end connected fixedly to the push button, and with its other end connected fixedly to the first engine and the second engine.

2. The mini vertical-and-horizontal engine structure as claimed in claim 1, wherein one end of the rear water channel is provided with a water input port, while one other end of the rear water channel is provided with three water output holes.

3. The mini vertical-and-horizontal engine structure as claimed in claim 1, wherein
one end of the front water channel is provided with three water input holes, the respective water input holes are connected and fixed to the respective water output holes of the rear water channel;
one other end of the front water channel is provided with three water output ports; and
in the front water channel is provided with a first water route, a second water route, and a third water route, each connected to the water input hole and the water output port.

4. The mini vertical-and-horizontal engine structure as claimed in claim 1, wherein the first engine is disposed in the rear water channel and is movable up and down; while the second engine is disposed in the rear water channel, and is movable to the right and to the left.

5. The mini vertical-and-horizontal engine structure as claimed in claim 1, further comprising:
a card, through which the first engine is connected and fixed to the rear water channel;
a card slot, disposed on the first engine, and is used to fit the card; and
a card hole, disposed on an upper end of the rear water channel, and is used to receive and fit the card,
wherein, a length of the card slot is greater than a height of the card.

6. The mini vertical-and-horizontal engine structure as claimed in claim 1, further comprising:
a spring, with its one end disposed at a bottom of the first engine, and with its other end connected and fixed in the rear water channel.

7. The mini vertical-and-horizontal engine structure as claimed in claim 1, further comprising:
a card axis, disposed on the front water channel, and is used to connect and fix the push button; and
a hole slot, disposed on the push button, and is fastened to the card axis of the front water channel.
